# EUROPÄISCHE PATENTANMELDUNG

(11) **EP 3 428 407 A1**
(43) Veröffentlichungstag der Anmeldung: **16.01.2019**
(21) Anmeldenummer: 18181212.4
(22) Anmeldetag: 02.07.2018
(51) Int. Cl.: F01D 17/10, F02C 6/08, F02C 7/18, F02C 9/18, F16K 37/00

(54) **VENTILSYSTEM FÜR EIN FLUIDLEITUNGSSYSTEM IN EINEM FLUGZEUGTRIEBWERK UND VERFAHREN ZUM BETRIEB EINES VENTILSYSTEMS FÜR EIN FLUIDLEITUNGSSYSTEM IN EINEM FLUGZEUGTRIEBWERK**

(30) Priorität: 12.07.2017 DE 102017115671
(71) Anmelder: Rolls-Royce Deutschland Ltd & Co KG, 15827 Blankenfelde-Mahlow (DE)
(72) Erfinder: FECHNER, Stefan, 15827 Blankenfelde-Mahlow (DE)
(74) Vertreter: Maikowski & Ninnemann Patentanwälte Partnerschaft mbB

(57) **Zusammenfassung**

Die Erfindung betrifft ein Ventilsystem für ein Fluidleitungssystem in einem Flugzeugtriebwerk mit mindestens einer Fluidleitung (10), wobei die mindestens eine Fluidleitung (10) mindestens ein Kontrollventil (1) aufweist, dadurch gekennzeichnet, dass die Ventilstellung (S1, S2) eines Stellelementes (2) im mindestens einen Kontrollventil (1) in Abhängigkeit der jeweils auf das mindestens eine Kontrollventil (1) aufgeprägten Druckverhältnisse (P1, P2) änderbar, insbesondere automatisch änderbar, ist. Das Ventilsystem weist ein Überwachungsmittel (20) auf zur Erfassung der jeweiligen Ventilstellung (S1, S2), insbesondere der Offenstellung und / oder der Geschlossenstellung des Stellelementes (2), in Abhängigkeit mindestens eines Messwertes (M), wobei in Abhängigkeit der erfassten Ventilstellung (S1, S2) ein Signal (Sig) abgeben wird. Das Ventilsystem weist weiterhin ein Mittel zum Einstellen eines minimal notwendigen Sperrluftstroms auf. Die Erfindung betrifft auch ein Ventilsteuerungsverfahren.

## Beschreibung

Die Erfindung betrifft ein Ventilsystem für ein Fluidleitungssystem in einem Flugzeugtriebwerk mit den Merkmalen des Anspruchs 1 und ein Verfahren zum Betrieb eines Ventilsystems für ein Fluidleitungssystem in einem Flugzeugtriebwerk mit den Merkmalen des Anspruchs 10.

In einem Flugzeugtriebwerk wird eine Vielzahl von Fluiden (z.B. Hydraulikflüssigkeit, Öl, Luft) durch Fluidleitungssysteme geführt. Ein Beispiel für ein solches Fluidleitungssystem ist das sogenannte Sekundär-Luftsystem (secondary air system), das alle Luftführungen im Flugzeugtriebwerk umfasst, die nicht unmittelbar zum Schub des Flugzeugtriebwerkes beitragen. Das Sekundär-Luftsystem führt z.B. Kühlluft und / oder Sperrluft in die Bereiche des Flugzeugtriebwerks, in denen die Luft benötigt wird.

Kühlluft wird typischerweise zur Kühlung von Turbinenschaufeln, Turbinenscheiben und / oder dem Turbinengehäuse (z.B. im Rahmen einer Schaufelspitzenspaltkontrolle (Tip Clearance Control) verwendet.

Sperrluft dient z.B. zurfluiddynamischen Abdichtung von Räumen im Turbinenbereich, z.B. gegenüber dem Eindringen heißer Gase.

Daher besteht die Aufgabe, Fluide innerhalb des Flugzeugtriebwerkes effizient zu führen oder zu steuern und Fluidleitungssysteme zu schaffen, die insbesondere auch robust gegenüber einem Versagen einer Fluidleitung sind.

Die Aufgabe wird durch ein Ventilsystem mit den Merkmalen des Anspruchs 1 gelöst.

Dabei ist im Ventilsystem die Ventilstellung eines Stellelementes im mindestens einen Kontrollventil in Abhängigkeit der jeweils auf das mindestens eine Kontrollventil aufgeprägten Druckverhältnisse änderbar, insbesondere automatisch änderbar. Und ein Überwachungsmittel erfasst die jeweilige Ventilstellung, insbesondere eine Offenstellung und / oder Geschlossenstellung des Stellelementes, in Abhängigkeit mindestens eines Messwertes, wobei in Abhängigkeit der erfassten Ventilstellung ein Signal abgeben wird. Durch die Verwendung einer Messwertüberwachung ist eine effiziente und nicht-invasive Überwachung der Ventilstellungen möglich. Damit kann z.B. effizient auf ein mögliches Versagen der Fluidleitungen, insbesondere von Luftleitungen, reagiert werden. Ein Mittel, z.B. das Überwachungsmittel, wird dazu verwendet, ein Einstellen eines minimal notwendigen Sperrluftstroms zu erreichen. Damit kann verhindert werden, dass der Druck lokal zu weit abfällt.

In einer Ausführungsform ist der mindestens eine Messwert ein Temperaturwert, ein Druckwert und / oder ein Strömungsgeschwindigkeitswert. Es ist insbesondere auch möglich, mehrere unterschiedliche Messwerte zu verwenden und Korrelationen zwischen den Messwerten auszunutzen.

In einer Ausführungsform ist ein Sensor, insbesondere mindestens ein Temperatursensor, mindestens ein Drucksensor und / oder mindestens ein Strömungsgeschwindigkeitssensor stromaufwärts und / oder stromabwärts des mindestens einen Kontrollventils angeordnet.

Auch wird in einer Ausführungsform des Ventilsystems mit dem Überwachungsmittel bei der Verarbeitung der Messwerte eine Abweichung der Messwerte von gegebenen und / oder ermittelten Referenzmesswerten ermittelt. Somit müssen nicht absolute Messwerte zur Überwachung verwendet werden, sondern es können geeignet skalierte Werte verwendet werden.

Ferner ist es in einer Ausführungsform möglich, dass das Signal für die Ventilstellung magnetisch, optisch, haptisch und / oder mechanisch anzeigbar ist. Das Signal kann z.B. über die Flugdatenverarbeitung des Flugzeugtriebwerks geführt werden, so dass eine entsprechende Ventilstellung im Maintenance Recorder oder auch im Cockpit anzeigbar ist.

Ausführungsformen des Ventilsystems können mindestens ein Kontrollventil mit einer Doppelklappe, einer Drehklappe und / oder einer Kugel als Stellelement für das Fluid aufweisen. Mit diesen Stellelementen kann ein effizientes Öffnen und Schließen der Fluidleitung erreicht werden.

Dabei kann in einer Ausführungsform Luft, insbesondere Kühlluft und / oder Sperrluft das Fluid sein, das durch die Fluidleitung strömt.

Dabei kann die Fluidleitung in einer Ausführungsform Luft von einer Kompressorstufe zu einer Turbinenstufe, insbesondere einer Hochdruckturbine des Flugzeugtriebwerkes, führen. Gerade im Bereich der Hochdruckturbine liegen hohe Temperaturen vor, so dass eine effiziente Kühlluftzufuhr sinnvoll ist. In einer weiteren Ausführungsform ist das mindestens eine Kontrollventil in räumlicher Nähe zu einer Turbinenstufe angeordnet.

Die Aufgabe wird auch durch ein Verfahren zum Betreiben eines Ventilsystems für ein Fluidleitungssystem in einem Flugzeugtriebwerk gelöst.

Dabei wird die Ventilstellung eines Stellelementes im mindestens einen Kontrollventil in Abhängigkeit der jeweils auf das mindestens eine Kontrollventil aufgeprägten Druckverhältnisse geändert, insbesondere automatisch geändert und mit einem Überwachungsmittel die jeweilige Ventilstellung, insbesondere die Offenstellung und / oder die Geschlossenstellung des Stellelementes, in Abhängigkeit mindestens eines Messwertes überwacht wird, wobei in Abhängigkeit der erfassten Ventilstellung dann ein Signal abgeben wird und ein minimal notwendiger Sperrluftstrom eingestellt wird.

Der Messwert kann z.B. ein Temperaturwert, ein Druckwert und / oder ein Strömungsgeschwindigkeitswert sein.

Dabei kann z.B. mindestens ein Messwert stromaufwärts und / oder stromabwärts des mindestens einen Kontrollventils gemessen werden.

Auch kann in einer Ausführungsform das Überwachungsmittel bei der Verarbeitung der Messwerte eine Abweichung der Messwerte von gegebenen und / oder ermittelten Referenzmesswerten ermitteln. Diese Ermittlung der Abweichung ist eine vergleichsweise einfache Maßnahme.

Auch kann das Signal für die Ventilstellung z.B. magnetisch, optisch, haptisch und / oder mechanisch angezeigt werden.

In einer Ausführungsform des Verfahrens ist das Fluid Luft, insbesondere Kühlluft und / oder Sperrluft. Diese Medien werden in Flugzeugtriebwerken benötigt.

In Zusammenhang mit den in den Figuren dargestellten Ausführungsbeispielen wird die Erfindung erläutert. Dabei zeigt
Fig. 1 eine schematische Schnittansicht durch einen Teil eines Flugzeugtriebwerkes mit einem Teil eines Sekundär-Luftsystems;
Fig. 2 eine schematische Schnittansicht einer Ausführungsform eines Ventilsystems im Sekundär-Luftsystems mit einem Kontrollventil;
Fig. 2A eine schematische Schnittansicht eines Kontrollventils in offener Ventilstellung;
Fig. 2B eine schematische Schnittansicht eines Kontrollventils in geschlossener Ventilstellung.

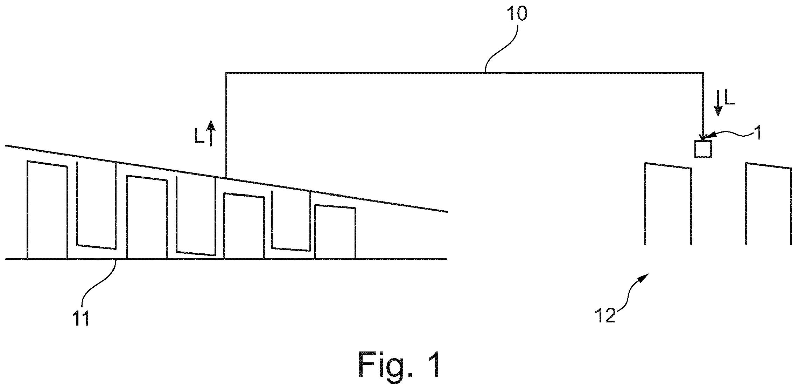

In Fig. 1 ist ausschnittsweise ein Teil eines Flugzeugtriebwerkes dargestellt. In der dargestellten Ausführungsform ist exemplarisch eine Fluidleitung 10 dargestellt, die hier einen Luftstrom L von einer Kompressorstufe 11 zu einer Turbinenstufe 12 führt. Der Luftstrom L wird an der Kompressorstufe 11 entnommen, wobei die Luftführung hier durch die - zumindest in der Seitenansicht - im Wesentlichen U-förmige Fluidleitung 10 geführt wird. Der Zielort der vergleichsweise kühlen Luft aus der Kompressorstufe 11 ist ein Raum um eine der Scheiben der Turbinenstufe. Hier wird ein Teil des Luftstroms L als Kühlluft eingesetzt.

Auch wird ein Teil des Luftstroms L noch weiter in das Innere des Flugzeugtriebwerks geführt, nämlich in einen Raum für Sperrluft. Damit können z.B. Lager vor dem Eintritt von Heißgasen geschützt werden.

Vor dem Eintritt in den Bereich der Turbinenstufe 12, nämlich vor dem Eintritt der Luft in den Raum um eine der Turbinenscheiben und den Raum für Sperrluft, ist ein Kontrollventil 1 als Teil eines Ventilsystems angeordnet.

Die Darstellung der Fig. 1 ist beispielhaft zu verstehen. Das Flugzeugtriebwerk kann eine andere Bauform haben (z.B. eine andere Anzahl von Kompressor- und / oder Turbinenstufen). Auch kann die Fluidleitung 10 Luft an einem anderen Ort abzapfen und / oder sie zu einem anderen Ort führen, wo sie z.B. als Kühlluft oder Sperrluft verwendet wird. Auch die Formen der Fluidleitungen 10 können anders, insbesondere kann sie komplexer, sein, so dass z.B. Luft von mehreren Stellen im Flugzeugtriebwerk abgeführt wird und / oder zu mehreren Stellen verteilt wird.

In der Ausführungsform der Fig. 1 ist die Fluidleitung 10 als Rohr mit einem kreisförmigen Querschnitt ausgebildet. In anderen Ausführungsformen sind auch andere Querschnitte (z.B. polygonal, elliptisch) möglich. Auch ist es möglich, dass sich der Querschnitt entlang der Strömung in der Luftleitung 10 ändert.

Grundsätzlich kann die Fluidleitung in einer anderen Ausführungsform des Ventilsystems auch flüssige Medien, wie z.B. Hydraulikflüssigkeit oder Öl, führen.

Die Funktion des Kontrollventils 1 innerhalb der Ausführungsformen des Ventilsystems wird im Folgenden genauer beschrieben.

Beispiele für Kontrollventile 1 (im Englischen check valves) im Sinne der folgenden Ausführungsformen sind Absperrventile, Schnellschlussventile, Rückschlagventile oder auch Verschlussventile, die einen Fluidfluss ermöglichen oder unterbinden können, wobei hier die Kontrollventile 1 in Abhängigkeit von am Kontrollventil 1 anliegenden Druckverhältnissen insbesondere automatisch steuerbar sind.

In Fig. 1 ist aus Gründen der Einfachheit nur ein Kontrollventil 1 am Eingangsflansch des Turbinengehäuses dargestellt. Grundsätzlich können auch mehr als ein Kontrollventil 1 verwendet werden. Auch ist es möglich, ein oder mehr Kontrollventile an anderen Stellen der Fluidleitungen 1 anzuordnen.

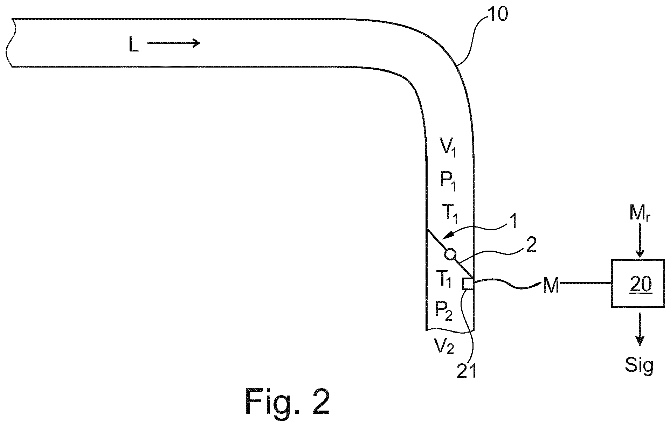

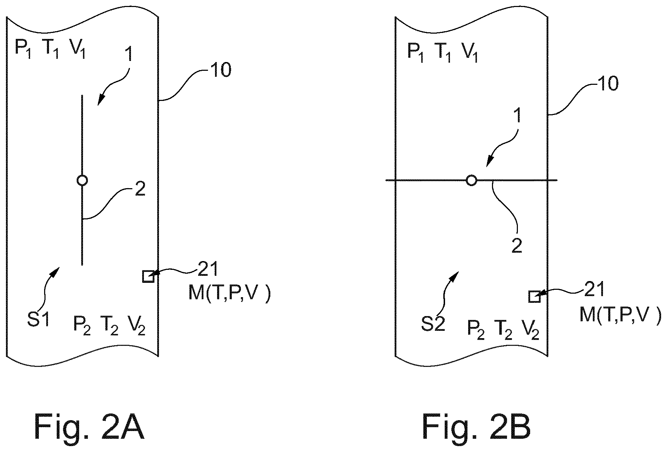

In Fig. 2 ist in einer schematischen Darstellung der Aufbau einer Ausführungsform eines Ventilsystems für ein Fluidleitungssystem dargestellt. Dabei kann grundsätzlich auf jeweils relevante Teile der Beschreibung der Fig. 1 Bezug genommen werden.

Das Fluidleitungssystem weist hier eine Fluidleitung 10 auf, durch die - wie im Ausführungsbeispiel der Fig. 1 - Luft geführt wird.

In der Fluidleitung 10 ist hier ein Kontrollventil 1 in Form eines Drehklappenventils mit einem Stellelement 2 angeordnet. Die beiden Ventilstellungen (S1, S2) des Drehklappenventils sind in den Fig. 2A und 2B dargestellt. In Fig. 2A ist das Kontrollventil 1 offen (S1) dargestellt, in Fig. 2B geschlossen (S2).

In alternativen Ausführungsformen wird anstelle des Drehklappenventils z.B. ein Rückschlagventil in Form einer Klappe verwendet.

Stromaufwärts des Kontrollventils 1 herrscht die Temperatur T1, der Druck P1 und die Strömungsgeschwindigkeit v1; stromabwärts herrschen die Temperatur T2, der Druck P2 und die Strömungsgeschwindigkeit v2. Die Sensoren 21 für diese Messwerte M, d.h. die Drücke Temperaturen und / oder Strömungsgeschwindigkeiten sind in den Fig. 2, 2A, 2B nicht dargestellt.

Dabei ist die Ventilstellung S1, S2 des Stellelementes 2 im Kontrollventil 1 in Abhängigkeit der jeweils am Kontrollventil 1 aufgeprägten Druckverhältnisse P1, P2 änderbar. Sollte z.B. auf Grund eines Bruchs oder eines Lecks, ein Druckunterschied (|P1 - P2|) einer bestimmten Größe vorliegen, so wird das Kontrollventil 1 automatisch geschlossen.

In Fig. 1 war dargestellt worden, dass das Kontrollventil 1 räumlich stromaufwärts der Turbinenstufe 12 liegt. Das schnelle Schließen des Kontrollventils 1 führt dazu, dass die Luft (d.h. die Kühlluft und die Sperrluft) in den jeweiligen Bereichen verbleibt und nicht zurückströmen kann. Durch andere Fluidleitungen 1 könnte dann immer noch Kühl- und Sperrluft in die Räume im Bereich der Turbinenscheiben 12 strömen.

Sollte z.B. durch das Leck in der Fluidleitung 1 Heißgas aus der Fluidleitung 1 strömen, so würde der Umgebungsbereich der Fluidleitung vor dem Heißgas aus den Räumen im Turbinenraum geschützt werden.

U.a. für die Betriebssicherheit ist es von Interesse, die Ventilstellung S1, S2 (offen, geschlossen) in robuster Weise zu überwachen.

In der dargestellten Ausführungsform wird ein Sensor 21 dazu verwendet, mindestens eine Temperatur T, einen Druck P und / oder eine Geschwindigkeit v in der Fluidleitung 10 in der Nähe des Kontrollventils 1 (stromaufwärts und / oder stromabwärts) zu messen.

Dieser gemessene Messwert M (d.h. der absolute Wert) wird für den Fall eines geschlossenen und eines offenen Kontrollventils 1 jeweils unterschiedlich sein, so dass eine Überwachung der Ventilstellung S1, S2 möglich ist.

Die Messwerte M werden an ein Überwachungsmittel 20, z.B. einen Mikrorechner, übertragen, der die Messwerte M verarbeiten und / oder speichern kann. Der Zustand der Ventilstellung S1, S2 kann dann in Form eines Signals Sig an eine optische, mechanische, haptische und / oder akustische Wiedergabeeinrichtung (hier nicht dargestellt) übertragen werden.

Die Überwachung der Ventilstellungen S1, S2 kann dabei auch in Abhängigkeit von einer Abweichung der Messwerte M von einem Referenzmesswert Mr erfolgen. Der Referenzmesswert Mr kann z.B. ein Sollwert oder ein gemittelter Wert sein, der über einen bestimmten Zeitraum hinaus vom Überwachungsmittel 20 gemessen wurde. Durch das Abziehen eines z.B. numerisch relativ großen Sollwertes (d.h. durch eine Skalierung) (|x- xr|) kann die Änderung des Wertes u.U. genauer erfasst werden.

Das Überwachungsmittel 20 kann auch dazu verwendet werden, die minimale Sperrluftversorgung sicherzustellen, sollte eine Fluidleitung 10 durch das Kontrollventil 1 geschlossen sein (d.h. es liegt ein entsprechendes Signal Sig vor). Dies kann z.B. dadurch erfolgen, dass über andere Fluidleitungen entsprechend mehr Luft in die Räume um die Turbinenstufe gefördert wird.

### Bezugszeichenliste

- 1: Kontrollventil
- 2: Stellelement

- 10: Fluidleitung
- 11: Kompressorstufe
- 12: Turbinenstufe

- 20: Überwachungsmittel

- L: Luftstrom (Fluidstrom)
- M: Messwert (Druck P, Temperatur T, Strömungsgeschwindigkeit v)
- Mr: Referenzmesswert
- P1: Druck vor dem Kontrollventil
- P2: Druck nach dem Kontrollventil
- S1: Ventilstellung offen
- S2: Ventilstellung geschlossen
- Sig: Signal in Abhängigkeit von der Ventilstellung

## Patentansprüche

1. Ventilsystem für ein Fluidleitungssystem in einem Flugzeugtriebwerk mit mindestens einer Fluidleitung (10), wobei die mindestens eine Fluidleitung (10) mindestens ein Kontrollventil (1) aufweist,
**dadurch gekennzeichnet, dass**
die Ventilstellung (S1, S2) eines Stellelementes (2) im mindestens einen Kontrollventil (1) in Abhängigkeit der jeweils auf das mindestens eine Kontrollventil (1) aufgeprägten Druckverhältnisse (P1, P2) änderbar, insbesondere automatisch änderbar, ist und
das Ventilsystem folgendes aufweist:
- ein Überwachungsmittel (20) zur Erfassung der jeweiligen Ventilstellung (S1, S2), insbesondere der Offenstellung und / oder der Geschlossenstellung des Stellelementes (2), in Abhängigkeit mindestens eines Messwertes (M), wobei in Abhängigkeit der erfassten Ventilstellung (S1, S2) ein Signal (Sig) abgeben wird, und
- ein Mittel zum Einstellen eines minimal notwendigen Sperrluftstroms.

2. Ventilsystem nach Anspruch 1, **dadurch gekennzeichnet, dass** der Messwert (M) ein Temperaturwert, ein Druckwert und / oder ein Strömungsgeschwindigkeitswert ist.

3. Ventilsystem nach Anspruch 1 oder 2, **gekennzeichnet durch** mindestens einen Sensor (21), insbesondere mindestens einen Temperatursensor, mindestens einen Drucksensor und / oder mindestens einen Strömungsgeschwindigkeitssensor stromaufwärts und / oder stromabwärts des mindestens einen Kontrollventils (1).

4. Ventilsystem nach mindestens einem der vorhergehenden Ansprüche, **dadurch gekennzeichnet, dass** mit dem Überwachungsmittel (20) bei der Verarbeitung der Messwerte (M) eine Abweichung der gemessenen Messwerte (M) von gegebenen und / oder ermittelten Referenzmesswerten (Mr) ermittelbar ist.

5. Ventilsystem nach mindestens einem der vorhergehenden Ansprüche, **dadurch gekennzeichnet, dass** das Signal (Sig) für die Ventilstellung (S1, S2) magnetisch, optisch, haptisch und / oder mechanisch anzeigbar ist.

6. Ventilsystem nach mindestens einem der vorhergehenden Ansprüche, **dadurch gekennzeichnet, dass** das mindestens eine Kontrollventil (1) eine Doppelklappe, eine Drehklappe oder eine Kugel als Stellelement (2) für das Fluid aufweist.

7. Ventilsystem nach mindestens einem der vorhergehenden Ansprüche, **dadurch gekennzeichnet, dass** das durch das Kontrollventil strömende Fluid Luft, insbesondere Kühlluft und / oder Sperrluft, ist.

8. Ventilsystem nach Anspruch 7, **dadurch gekennzeichnet, dass** die Fluidleitung (10) Luft von einer Kompressorstufe zu einer Turbinenstufe, insbesondere einer Hochdruckturbine, des Flugzeugtriebwerkes führt.

9. Ventilsystem nach mindestens einem der vorhergehenden Ansprüche, **dadurch gekennzeichnet, dass** das mindestens eine Kontrollventil (1) in räumlicher Nähe zu einer Turbinenstufe angeordnet ist.

10. Verfahren zum Betreiben eines Ventilsystems für ein Fluidleitungssystem in einem Flugzeugtriebwerk mit mindestens einer Fluidleitung (10), wobei die mindestens eine Fluidleitung (10) mindestens ein Kontrollventil (1) aufweist,
**dadurch gekennzeichnet, dass**
a) die Ventilstellung (S1, S2) eines Stellelementes (2) im mindestens einen Kontrollventil (1) in Abhängigkeit der jeweils auf das mindestens eine Kontrollventil (1) aufgeprägten Druckverhältnisse (P1, P2) geändert wird, insbesondere automatisch geändert wird,
b) mit einem Überwachungsmittel (20) die jeweilige Ventilstellung (S1, S2), insbesondere die Offenstellung und die Geschlossenstellung, des Stellelementes (2) in Abhängigkeit mindestens eines Messwertes (M) überwacht wird, wobei
c) in Abhängigkeit der erfassten Ventilstellung (S1, S2) ein Signal (Sig) abgeben wird, und
d) ein minimal notwendiger Sperrluftstrom eingestellt wird.

11. Verfahren zum Betrieben eines Ventilsystems nach Anspruch 10, **dadurch gekennzeichnet, dass** der Messwert (M) ein Temperaturwert, ein Druckwert und / oder ein Strömungsgeschwindigkeitswert ist.

12. Verfahren zum Betreiben eines Ventilsystems nach Anspruch 10 oder 11, **dadurch gekennzeichnet, dass** mindestens ein Messwert (M) stromaufwärts und / oder stromabwärts des mindestens einen Kontrollventils (1) gemessen wird.

13. Verfahren zum Betreiben eines Ventilsystems nach mindestens einem der Ansprüche 10 bis 12, **dadurch gekennzeichnet, dass** das Überwachungsmittel (20) bei der Verarbeitung der Messwerte (M), eine Abweichung der Messwerte (M) von gegebenen und / oder ermittelten Referenzmesswerten (Mr) ermittelt.

14. Verfahren zum Betreiben eines Ventilsystems nach mindestens einem der Ansprüche 10 bis 13, **dadurch gekennzeichnet, dass** das Signal (Sig) für die Ventilstellung (S1, S2) magnetisch, optisch, haptisch und / oder mechanisch angezeigt wird.

15. Verfahren zum Betreiben eines Ventilsystems nach mindestens einem der Ansprüche 10 bis 14, **dadurch gekennzeichnet, dass** das durch das Kontrollventil strömende Fluid Luft, insbesondere Kühlluft und / oder Sperrluft, ist.
